# FASCICULE DE BREVET EUROPEEN

(11) **EP 0 686 368 B1**
(45) Date de publication et mention de la délivrance du brevet: **14.01.1998**
(21) Numéro de dépôt: 95420144.8
(22) Date de dépôt: 07.06.1995
(51) Int. Cl.: A47J 37/06, F24C 7/06

(54) **Elément chauffant mobile pour appareil électrique de cuisson**
Bewegliches Heizelement für elektrisches Gargerät
Pivotable resistance heater for electric cooking apparatus

(30) Priorité: 08.06.1994 FR 9407205
(43) Date de publication de la demande: 13.12.1995
(73) Titulaire: SEB S.A., 69130 Ecully (FR)
(72) Inventeur: Perrin, Claude, F-88120 le Syndicat (FR); Godel, Pascal, F-88200 Remiremont (FR)

(56) Documents cités:
- EP-A- 0 380 417
- EP-A- 0 522 975
- WO-A-93/16569
- AT-A- 377 074
- AU-B- 429 859
- CH-A- 202 806
- DE-A- 3 246 429
- DE-A- 3 602 021
- FR-A- 2 696 332

## Description

La présente invention se rapporte au domaine des appareils électriques de cuisson du type four, gril, ou barbecue ou tout autre appareil utilisé pour des cuissons, des grillades ou des rôtissages. L'invention concerne plus particulièrement l'agencement d'un élément chauffant dans un tel appareil.

Il est déjà connu dans l'art antérieur de réaliser des fours électriques comportant un élément chauffant blindé lequel peut être dégagé de la sole de l'enceinte du four par un mouvement de pivotement pour accéder plus facilement à ladite sole au cours d'une opération de nettoyage de l'enceinte de cuisson. De telles réalisations présentent un certain nombre d'inconvénients. En effet les moyens de régulation en température des appareils électriques de cuisson ne sont en général pas associés ou reliés directement à l'élément chauffant pivotant pour contrôler la température desdits éléments chauffants et de l'enceinte de cuisson de manière précise. En outre les mécanismes utilisés pour obtenir un pivotement de l'élément chauffant sont en général complexes et coûteux.

L'objet de la présente invention consiste donc à remédier aux inconvénients de l'art antérieur et à réaliser un appareil de cuisson électrique dans lequel l'élément chauffant peut être déplacé d'une part et relié à un capteur thermique d'autre part.

Un autre objet de la présente invention consiste à réaliser un mécanisme de pivotement et un pont thermique entre l'élément chauffant et le capteur thermique de manière simple et peu coûteuse.

Les objets assignés à l'invention sont atteints à l'aide d'un appareil électrique de cuisson comportant un bâti sur lequel est agencé à l'aide d'un moyen de support et de guidage au moins un élément chauffant du type blindé, en contact thermique avec un capteur thermique pour assurer la régulation thermique de l'appareil, ledit élément chauffant pouvant être déplacé et positionné par l'intermédiaire du moyen de guidage d'une part dans au moins une position de travail au voisinage d'une zone de cuisson et d'autre part dans une position de dégagement par rapport à la position de travail, caractérisé en ce que le moyen de guidage constitue une sonde thermique mettant en contact thermique l'élément chauffant avec le capteur thermique

Les caractéristiques et avantages de l'invention ressortiront mieux à la lecture de la description donnée ci-après en référence aux dessins annexés donnés à titre d'exemples non limitatifs dans lesquels :
- La figure 1 représente une vue partielle en coupe d'un assemblage de l'élément chauffant et du bâti de l'appareil électrique de cuisson conforme à l'invention.
- La figure 2 représente une vue partielle en perspective de l'assemblage de la figure 1 conformément à l'invention.

Dans la description détaillée de l'invention il sera fait allusion plus particulièrement à un four électrique mais l'invention ne se limite nullement à une telle réalisation particulière.

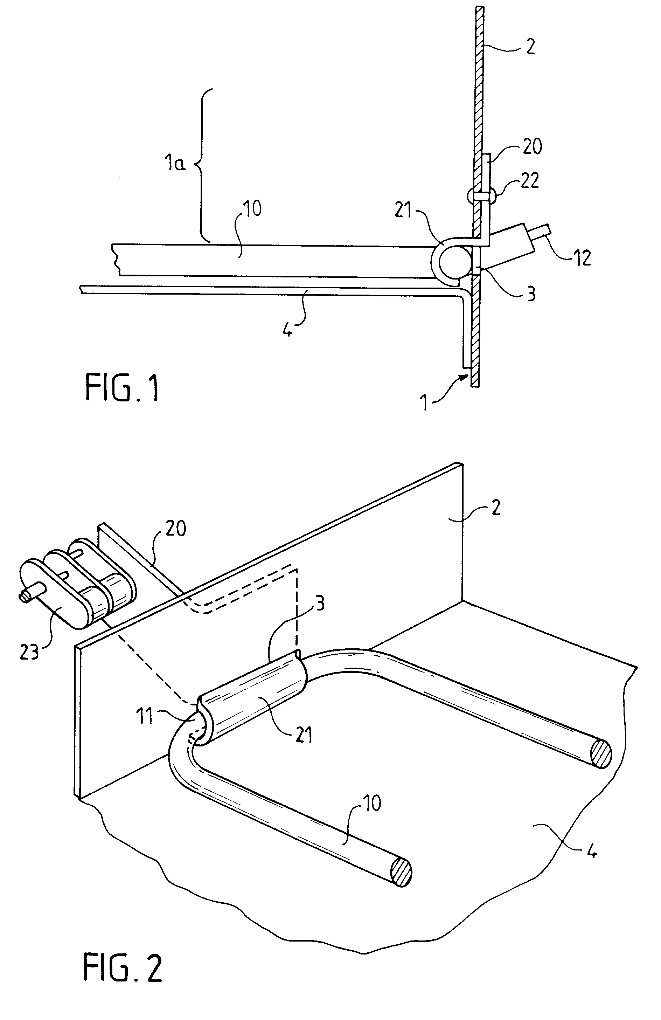

La figure 1 montre une vue partielle en coupe d'un appareil électrique de cuisson comportant un bâti 1 et un élément chauffant 10 du type blindé. Les différentes parties du bâti 1, représentées à la figure 1, sont constituées d'une sole 4 solidarisée avec une paroi latérale 2.

Avantageusement, des parois supplémentaires peuvent être montées sur le bâti 1 de manière à constituer une enceinte de cuisson dans laquelle une zone de cuisson 1a est localisée. En y ajoutant une porte d'accès, non représentée aux figures, l'appareil électrique de cuisson conforme à l'invention réalise une enceinte de cuisson fermée d'un four électrique.

Selon un exemple de réalisation, la sole 4 est fixée par tout moyen sur la paroi latérale 2 et orientée perpendiculairement par rapport à ladite paroi latérale 2.

L'élément chauffant 10 s'étend dans un plan d'extension parallèle à la sole 4 et situé au voisinage de ladite sole 4 lorsque ledit élément chauffant est dans une position de travail. Une telle position de travail de l'élément chauffant 10 correspond à une localisation dans laquelle l'appareil électrique est alimenté pour procéder à une cuisson. Ainsi l'espace situé au dessus de l'élément chauffant 10 définit la zone de cuisson 1a.

L'appareil de cuisson comporte également un moyen de guidage 20 fixé sur la paroi latérale 2 du bâti 1 par tout moyen et notamment par des rivets 22 ou des vis, non représentées aux figures. Le moyen de guidage 20 constitue un moyen de support pour l'élément chauffant 10 dans au moins une position de travail représentée à la figure 1. Le moyen de guidage 20 est constitué d'une patte métallique supportant un capteur thermique 23 d'une part et assurant le déplacement de l'élément chauffant 10 d'autre part. En effet la patte métallique présente une forme profilée de manière à faciliter sa fixation sur la paroi latérale 2 et à permettre le montage du capteur thermique 23 sur ladite patte métallique, tel que cela est représenté à la figure 2. En outre la patte métallique constituant le moyen de guidage 20 comporte une boucle 21 présentant au moins partiellement une forme cylindrique entourant une portion 11 de l'élément chauffant 10 pour réaliser le moyen de support autorisant un déplacement par pivotement de l'élément chauffant 10 ainsi que pour réaliser un pont thermique entre ledit élément chauffant 10 et le capteur thermique 23.

Avantageusement le moyen de guidage 20 est fixé sur la paroi latérale 2 à l'extérieur de la zone de cuisson 1a mais pénètre avec la boucle 21 dans la zone de cuisson 1a par l'intermédiaire d'une ouverture 3 ménagée dans la paroi latérale 2.

Selon une variante de réalisation de l'appareil électrique de cuisson conforme à l'invention, le moyen de guidage 20 est fixé, par tout moyen connu, et notamment à l'aide d'une pièce angulaire de fixation ou à l'aide d'une configuration spécifique, directement sur le bâti 1 ou sur la sole 4.

L'élément chauffant 10 présente une forme quelconque mais avec au moins une portion 11 s'étendant le long de la paroi latérale 2 et entourée au moins partiellement par la boucle 21. Cette dernière, de forme cylindrique, partiellement ouverte présente un diamètre interne correspondant au diamètre de l'élément chauffant blindé de manière à maintenir ledit élément chauffant 10 de façon stable tout en autorisant le déplacement de ce dernier. L'élément chauffant 10 qui n'est fixé à aucune autre de ses extrémités peut ainsi être positionné d'une part dans une position de travail correspondant à une position au voisinage de la zone de cuisson 1a et de préférence en dessous de celle-ci et d'autre part dans une position de dégagement par rapport à la zone de cuisson 1a par l'intermédiaire du moyen de guidage 20 autorisant un déplacement de l'élément chauffant 10. Ce dernier peut donc être pivoté ou déplacé vers une position haute libérant de ce fait la sole 4 pour faciliter son nettoyage par exemple. La position haute correspond à un dégagement de l'élément chauffant 10 à l'aide d'un pivotement d'un angle inférieur ou égal à 90°.

Le moyen de guidage 20 assure donc un guidage en rotation de l'élément chauffant 10. Par ailleurs la boucle 21 métallique, et de préférence en aluminium, en contact intime avec l'élément chauffant 10 réalise le pont thermique avec le capteur thermique 23. Ce dernier participe à la régulation de la température de l'élément chauffant 10, lequel présente plusieurs parties, non représentées aux figures, dont les extrémités traversent la paroi latérale 2 pour constituer des connexions 12 à l'extérieur de la zone de cuisson 1a ou de l'enceinte de cuisson. Des ouvertures complémentaires, non représentées aux figures, sont ménagées dans la paroi latérale 2 à cet effet.

Avantageusement le bâti 1 comporte un moyen de maintien destiné à maintenir l'élément chauffant 10 dans une position de dégagement, verticale au voisinage de la paroi latérale 2 du bâti 1 de manière à réaliser une seconde position de travail. Ainsi l'élément chauffant 10 peut être pivoté par une rotation de l'ordre de 90° pour libérer ou dégager la sole 4 et s'étendre dans un plan d'extension parallèle à la paroi latérale 2 de manière à réaliser un gril. A cet effet le capteur thermique 23 est réglable sur différentes températures adaptables pour différentes cuissons et/ou positions de travail. Le moyen de maintien de l'élément chauffant 10, non représenté aux figures, est un moyen connu comportant par exemple des lamelles métalliques flexibles ou tout moyen nécessaire à une opération de clipsage.

L'appareil de cuisson électrique conforme à l'invention est utilisé soit comme four classique avec un élément chauffant 10 disposé en dessous de la zone de cuisson 1a, soit avec l'élément chauffant 10 disposé en face d'un aliment destiné à la cuisson et reposant sur la sole 4 ou monté sur un tournebroche.

Dans une réalisation de base de l'appareil de cuisson électrique conforme à l'invention, le moyen de guidage 20 permet uniquement un dégagement de l'élément chauffant 10 de la sole 4 pour faciliter un nettoyage de ladite sole 4. Le moyen de guidage 20, par l'intermédiaire de la boucle 21 permet donc de réaliser un pont thermique entre l'élément chauffant 10 et le capteur thermique 23 indépendamment de la position dudit élément chauffant 10. Ce dernier est donc en contact thermique avec le capteur thermique 23 par l'intermédiaire d'une sonde thermique laquelle constitue également un moyen de support pour l'élément chauffant 10 dans au moins une position de travail. La sonde thermique est réalisée avec le moyen de guidage 20. Une deuxième position de travail orientée de 90° par rapport à la première position de travail est facilement réalisable en n'altérant pas la régulation thermique.

Selon une variante de réalisation de l'appareil électrique de cuisson conforme à l'invention, la sonde thermique est une patte métallique distincte du moyen de guidage 20 et venant en contact avec l'élément chauffant 10 lorsque ce dernier est dans une position de travail. Il est ainsi envisageable de réaliser un support complémentaire de l'élément chauffant 10 localisé à un endroit quelconque de la sole 4 pour venir en contact avec l'élément chauffant 10 lorsque ce dernier est dans une position de travail et correspondant à une position s'étendant parallèlement à la sole 4. Le moyen de guidage 20 dans cette variante de réalisation est principalement utilisé pour assurer le guidage en rotation de l'élément chauffant 10 et éventuellement pour assurer une seconde régulation thermique. La patte métallique distincte du moyen de guidage 20 est bien évidemment reliée à un moyen de régulation thermique. Le capteur thermique 23 est de préférence constitué d'un thermostat.

L'appareil électrique de cuisson conforme à la présente invention constitue avantageusement un four ou un gril.

Selon une variante de réalisation de l'appareil électrique de cuisson conforme à l'invention, ce dernier constitue un barbecue.

Selon une variante de réalisation, non représentée au figures et conforme à la présente invention, le capteur thermique 23 et l'élément chauffant 10 ou un élément chauffant complémentaire, sont montés en voûte d'un four électrique. Le moyen de guidage 20 est donc monté en voûte de l'enceinte de cuisson pour réaliser une position de travail au voisinage de ladite voûte. Une telle position de travail est notamment adaptée pour des opérations de grillage.

Un avantage de l'appareil de cuisson électrique conforme à la présente invention réside dans l'utilisation d'un unique élément chauffant 10 permettant d'obtenir plusieurs types de cuisson et plusieurs positions de travail de ce dernier.

Un autre avantage de la présente invention réside dans la facilité de montage et de réalisation d'un élément servant à la fois de mécanisme de pivotement pour l'élément chauffant 10, et de pont thermique.

Un autre avantage des appareils électriques conformes à la présente invention, réside dans la sécurité de fonctionnement desdits appareils. Ces derniers sont en effet contrôlés ou soumis à une régulation en température permanente, quelle que soit la position et le mode d'utilisation de l'élément chauffant 10. L'utilisation d'un moyen de sécurité complémentaire permettant de déterminer la position de l'élément chauffant 10 peut ainsi être évitée.

Un avantage supplémentaire de la présente invention réside dans la localisation à l'extérieur d'une zone de cuisson ou d'une enceinte de cuisson du capteur thermique 23, pour obtenir une régulation en température plus précise. En outre, la durée de vie du capteur thermique 23 est augmentée par la même occasion. L'utilisation du moyen de guidage 20 permet ainsi de réaliser de manière peu coûteuse un support et une sonde thermique pour l'élément chauffant 10 mobile.

## Revendications

1. Appareil électrique de cuisson comportant un bâti (1) sur lequel est agencé à l'aide d'un moyen de support et de guidage (20) au moins un élément chauffant (10) du type blindé, en contact thermique avec un capteur thermique (23) pour assurer la régulation thermique de l'appareil, ledit élément chauffant (10) pouvant être déplacé et positionné par l'intermédiaire du moyen de guidage (20) d'une part dans au moins une position de travail au voisinage d'une zone de cuisson (1a) et d'autre part dans une position de dégagement par rapport à la position de travail, caractérisé en ce que le moyen de guidage (20) constitue une sonde thermique mettant en contact thermique l'élément chauffant (10) avec le capteur thermique (23).

2. Appareil électrique de cuisson selon la revendication 1 caractérisé en ce que le moyen de guidage (20) est constitué d'une patte métallique supportant le capteur thermique (23) d'une part et assurant le déplacement de l'élément chauffant (10) d'autre part.

3. Appareil électrique de cuisson selon la revendication 2 caractérisé en ce que la patte métallique comporte une boucle (21) présentant au moins partiellement une forme cylindrique entourant une portion (11) de l'élément chauffant (10) pour réaliser un moyen de support autorisant un déplacement par pivotement de l'élément chauffant (10) ainsi que pour réaliser un pont thermique entre ledit élément chauffant (10) et le capteur thermique (23).

4. Appareil électrique de cuisson selon l'une des revendications 1 à 3 caractérisé en ce que le bâti (1) comporte un moyen de maintien destiné à maintenir l'élément chauffant (10) dans une position de dégagement verticale au voisinage d'une paroi latérale (2) du bâti (1) de manière à réaliser une seconde position de travail.

5. Appareil électrique de cuisson selon l'une des revendications 1 à 4 caractérisé en ce que le moyen de guidage (20) est fixé sur une paroi latérale (2) du bâti (1).

6. Appareil électrique de cuisson selon l'une des revendications 1 à 5 caractérisé en ce que le capteur thermique (23) est un thermostat.

7. Appareil électrique de cuisson selon l'une des revendications 1 à 6 caractérisé en ce que des parois supplémentaires sont montées sur le bâti (1) de manière à constituer une enceinte de cuisson dans laquelle la zone de cuisson (1a) est localisée.

8. Appareil électrique de cuisson selon la revendication 7 caractérisé en ce que le moyen de guidage 20 est monté en voûte de l'enceinte de cuisson pour réaliser une position de travail au voisinage de ladite voûte.

9. Appareil électrique de cuisson selon l'une des revendications 1 à 8 caractérisé en ce qu'il est constitué par un four électrique.

10. Appareil électrique de cuisson selon l'une des revendications 1 à 6 caractérisé en ce qu'il est constitué par un gril.

## Claims

1. Electrical cooking equipment including a frame (1) on which at least one heater element (10) of the shielded type is mounted by means of support and guide means (20), the heater element being in thermal contact with a temperature sensor (23) for regulating the temperature of the equipment, it being possible for said heater element (10) to be displaced and positioned by the guide means (20) firstly into at least one work position in the vicinity of a cooking zone (1a), and secondly into a tilted position away from the work position, said electrical cooking equipment being characterized in that the guide means (20) constitute a temperature probe putting the heater element (10) in contact with the temperature sensor (23).

2. Electrical cooking apparatus according to claim 1, characterized in that the guide means (20) are constituted by a metal bracket firstly supporting the temperature sensor (23) and secondly enabling the heater element (10) to be displaced.

3. Electrical cooking equipment according to claim 2, characterized in that the metal bracket includes a loop (21), at least a portion of which is cylindrical in shape and surrounds a portion (11) of the heater element (10) so as to implement support means enabling the heater element (10) to be tilted, and so as to implement a heat bridge between said heater element (10) and the temperature sensor (23).

4. Electrical cooking equipment according to any one of claims 1 to 3, characterized in that the frame (1) is provided with holding means serving to hold the heater element (10) in a vertical, tilted position in the vicinity of the side wall (2) of the frame (1) so as to implement a second work position.

5. Electrical cooking equipment according to any one of claims 1 to 4, characterized in that the guide means (20) are fixed to a side wall (2) of the frame (1).

6. Electrical cooking equipment according to any one of claims 1 to 5, characterized in that the temperature sensor (23) is a thermostat.

7. Electrical cooking equipment according to any one of claims 1 to 6, characterized in that additional walls are mounted on the frame (1) so as to constitute a cooking chamber in which the cooking zone (1a) is located.

8. Electrical cooking equipment according to claim 7, characterized in that the guide means (20) are mounted at the top of the cooking chamber to implement a work position in the vicinity of said top.

9. Electrical cooking equipment according to any one of claims 1 to 8, characterized in that it is constituted by an electric oven.

10. Electrical cooking equipment according to any one of claim 1 to 6, characterized in that it is constituted by a grill.

## Patentansprüche

1. Elektrisches Kochgerät mit einem Rahmen (1), an welchem mittels eines Träger- und Führungsmittels (20) wenigstens ein gekapseltes Heizelement (10) angeordnet ist, das mit einem Wärmefühler (23) in Wärmekontakt steht, um die Wärmeregulierung des Geräts zu gewährleisten, wobei das Heizelement (10) mittels des Führungsmittels (20) zum einen in wenigstens eine Arbeitsstellung in der Nähe einer Kochzone (1a) und zum anderen gegenüber der Arbeitsstellung in eine Freigabestellung verstellt und in dieser positioniert werden kann, dadurch gekennzeichnet, daß das Führungsmittel (20) eine Wärmesonde bildet, welches das Heizelement (10) mit dem Wärmefühler (23) in Wärmekontakt bringt.

2. Elektrisches Kochgerät nach Anspruch 1, dadurch gekennzeichnet, daß das Fuhrungsmittel (20) aus einer Metallasche besteht, die zum einen den Wärmefuhler (23) trägt und zum anderen die Verstellung des Heizelementes (10) gewährleistet.

3. Elektrisches Kochgerät nach Anspruch 2, dadurch gekennzeichnet, daß die Metallasche einen Bügel (21) aufweist, der wenigstens teilweise eine zylindrische, einen Abschnitt (11) des Heizelementes (10) umgebende Form hat, um ein Trägermittel auszubilden, das eine Schwenkverstellung des Heizelementes (10) ermöglicht sowie eine Wärmebrücke zwischen dem Heizelement (10) und dem Wärmefühler (23) bildet.

4. Elektrisches Kochgerät nach einem der Ansprüche 1 bis 3, dadurch gekennzeichnet, daß der Rahmen (1) ein Haltemittel aufweist, das dafür vorgesehen ist, das Heizelement (10) in einer vertikalen Freigabestellung in der Nähe einer Seitenwand (2) des Rahmens (1) zu halten, so daß eine zweite Arbeitsstellung geschaffen ist.

5. Elektrisches Kochgerät nach einem der Ansprüche 1 bis 4, dadurch gekennzeichnet, daß das Führungsmittel (20) an einer Seitenwand (2) des Rahmens (1) befestigt ist.

6. Elektrisches Kochgerät nach einem der Ansprüche 1 bis 5, dadurch gekennzeichnet, daß der Wärmefühler (23) ein Thermostat ist.

7. Elektrisches Kochgerät nach einem der Ansprüche 1 bis 6, dadurch gekennzeichnet, daß an dem Rahmen (1) zusätzliche Wände angebracht sind, um einen Kochraum zu bilden, in welchem die Kochzone (1a) angeordnet ist.

8. Elektrisches Kochgerät nach Anspruch 7, dadurch gekennzeichnet, daß das Führungsmittel (20) am oberen Abschnitt des Kochraumes angebracht ist, um eine Arbeitsstellung in der Nähe des oberen Abschnittes auszubilden.

9. Elektrisches Kochgerät nach einem der Ansprüche 1 bis 8, dadurch gekennzeichnet, daß es ein elektrischer Ofen ist.

10. Elektrisches Kochgerät nach einem der Ansprüche 1 bis 6, dadurch gekennzeichnet, daß es ein Grill ist.
